# EUROPEAN PATENT APPLICATION

(11) **EP 4 397 723 A1**
(43) Date of publication of application: **10.07.2024**
(21) Application number: 22864727.7
(22) Date of filing: 02.09.2022
(51) Int. Cl.: C09C 1/30, C09D 5/00, C09D 17/00, C09D 179/08, C09D 7/61, C09D 1/02

(54) **AQUEOUS COMPOSITION AND CURED PRODUCT THEREOF**

(30) Priority: 03.09.2021 JP 2021143744
(71) Applicant: Qrsytem Co.,Ltd., Tokyo 164-0001 (JP)
(72) Inventor: KANEKO, Noriyoshi, Mitaka-shi, Tokyo 181-0003 (JP); KANEKO, Ryuzo, Koganei-shi, Tokyo 184-0014 (JP)
(74) Representative: J A Kemp LLP
(86) International application number: PCT/JP2022/033124
(87) International publication number: WO 2023/033145

(57) **Abstract**

Disclosed are a novel aqueous composition which can be used for a base material surface by application, which is resistant to high temperature and high-frequency impact, which provides a film surface strength enough to withstand the combustion pressure and the fuel injection pressure, which is capable of forming a cured-product film having a low specific heat and a low thermal conductivity, and which gives a cured product capable of film formation not only on an aluminum alloy base material, but also on a metal base material such as an iron base material or a titanium base material, and a cured product of the novel aqueous composition. The aqueous composition includes: a hollow powder material composed of a silicon dioxide compound, having a hollow structure therein, the hollow structure being a porous or single-spherical structure; a metal oxide powder material having a non-hollow structure; a metal oxide fiber material; an alkali metal silicate; and water. The aqueous composition includes at least sodium silicate and potassium silicate as the alkali metal silicate, and the hollow powder material has an average particle size within the range of 5 µm to 40 µm, a bulk specific gravity within the range of 0.14 to 0.95 g/cm³, and a pressure strength of not less than 10 MPa.

## Description

### TECHNICAL FIELD

The present invention relates to an aqueous composition and a cured product thereof. The cured product of the present invention is particularly useful as a thermal insulation film formed by coating on the inner wall surface of the combustion chamber of an internal combustion engine.

### BACKGROUND ART

Conventionally, in order to reduce the loss of the heat generated from the combustion chamber of an internal combustion engine, attempts have been made by, for example, applying a thermal spray coating composed of a ceramic composition as a material having low thermal conductivity to the inner wall of the combustion chamber, or forming the inner-wall member itself of the combustion chamber with a sintered ceramic material. As a component of the thermal insulation material, a conventional ceramic thermal spray material, sintered ceramic, or the like enables more reduction of the thermal conductivity itself than a metal member does. However, high specific heat of such a component causes problems such as the local high-temperature phenomenon on the inner wall surface, which leads to occurrence of the so-called knocking such as ignition in an unintended part in the combustion chamber. Therefore, recent focus has been given to formation of the insulation material using a material having not only low thermal conductivity, but also low specific heat, in particular, low volumetric specific heat. For example, Patent Documents 2 and 3 describe a film having low volumetric specific heat and low thermal conductivity composed of an anodized film as an example of a thermal insulation layer, which film is formed by intentionally forming hard anodized aluminum into a thick film of several ten micrometers while allowing formation of pits and holes therein, and then sealing the surface-layer portion of the pits to maintain a predetermined space volume.

Patent Document 1 describes, as an index of the thermal insulation performance, the change in the temperature (swing width: ΔT) of a thermal insulation layer provided on the wall surface of the combustion chamber during one combustion cycle of a diesel engine, and also describes that the swing width ΔT is associated with the heat loss. This finding is known, and is based on the calculation equation Q = A × h × (Tg - Twall), wherein Q is the heat loss. In this equation, A is the surface area (m2) in the cylinder; h is the coefficient of heat transfer (W/m²·K) due to the pressure and the gas flow in the cylinder; Tg is the combustion gas temperature (K) in the cylinder; and Twall is the temperature (K) of the wall surface facing the inside of the cylinder (in contact with the combustion gas in the cylinder).

According to the above equation, the value of the heat loss Q decreases as the Twall value becomes closer to the Tg temperature during the combustion of the combustion gas. In other words, as the swing width ΔT increases, the value of the heat loss Q decreases. Therefore, the swing width ΔT is employed as the index. Such a film having a low specific heat and a low thermal conductivity is generally called a swing film, and the invention of Patent Document 2 is practically used also in mass-produced cars. Based on the practical thermophysical properties of the film, the film exhibits a performance with the following nominal values: thermal conductivity = 0.67 W/m·k; volumetric specific heat = 1300 kJ/m³·k. Patent Document 3 has made further improvements to achieve the following ranges of preferred thermophysical properties: thermal conductivity = 0.5 to 1.5 W/m k; volumetric specific heat = 500 to 800 kJ/m³·k.

Further, Patent Document 4 describes an example that is in the form of a coating comprising a hollow metal oxide aggregate, wherein a surface of an aluminum base material is preliminarily oxidized by an aluminum anodization process to improve adhesion between the aluminum base material and the coating.

### PRIOR ART DOCUMENTS

### [Patent Documents]

Patent Document 1: WO 2009/020206
Patent Document 2: JP 2015-32116 A
Patent Document 3: JP 2020-190023 A
Patent Document 4: JP 2015-68302 A

### [Non-patent Document]

Non-Patent Document 1: Hideo Yamashita et al.: Heat Insulation by Temperature Swing in Combustion Chamber Walls (Fifth Report) - Influence of Engine Operating Condition -, Transactions of Society of Automotive Engineers of Japan, Vol. 49, No. 2, p. 156-161 (2018)

### SUMMARY OF THE INVENTION

### PROBLEMS TO BE SOLVED BY THE INVENTION

In the methods described in Patent Documents 2 and 3, the anodized-film formation process involves a step of immersion in an electrolyte. The methods therefore require precise masking control for the surfaces other than the surface to be treated, and a certain length of time for the anodization process, so that the methods have a problem in the mass-production efficiency. Further, since the conventional method of Patent Document 2 is based on an aluminum anodization process, this method is not applicable to non-aluminum members. According to Patent Document 3, its application to base materials other than Al base materials is realized by providing a metal layer comprising an Al component by performing a thermal spraying/welding process before the formation of the anodized film. However, this has another restriction in the film formation process, such as the additional requirement of the thermal spraying/welding process. Patent Document 4 clearly describes the coating form, and hence describes the advantage that the thermal insulation film can be simply and continuously formed by application and baking. However, this method indispensably requires an anodization process for the surface layer of the base material in order to maintain the adhesion of the film to the base material, so that the method has a problem in that its use is limited to application to aluminum base materials. The present invention solves the above problem while realizing a performance which at least achieves practical thermophysical properties almost equivalent to those in Patent Document 2, and an object of the invention is to enable production of a coating composition showing both high thermal insulation properties and mass productivity, which composition enables film formation not only on aluminum base materials, but also on other metal base materials such as iron or titanium base materials. Further, the film needs to be resistant to physical loads in use environments in which the normal working temperature is as high as not less than 300°C, in which heat load cycles at 300 to 600°C locally occur depending on conditions such as knocking, and which is under a high-frequency impact environment caused by high-speed piston motion. In addition, the film needs to meet the requirement of the surface strength of the film which is enough to withstand the combustion pressure and the fuel injection pressure. Further, in cases where the base material is made of aluminum, the alkali content of the aqueous composition needs to be appropriately adjusted in order to prevent embrittlement of the aluminum base material due to its excessive oxidization by the alkali component.

An object of the present invention is to provide a novel aqueous composition which can be used for a base material surface by application, which is resistant to high temperature and high-frequency impact, which provides a film surface strength enough to withstand the combustion pressure and the fuel injection pressure, which is capable of forming a cured-product film having a low specific heat and a low thermal conductivity, and which gives a cured product capable of film formation not only on an aluminum alloy base material, but also on a metal base material such as an iron base material or a titanium base material, and a cured product of the novel aqueous composition.

### MEANS FOR SOLVING THE PROBLEMS

The present inventors intensively studied to discover that an aqueous composition having a specific composition enables achievement of the object of the present invention described above, thereby completing the present invention.

More specifically, the present invention provides the following.

(1) An aqueous composition comprising:
   a hollow powder material composed of a silicon dioxide compound, having a hollow structure therein, the hollow structure being a porous or single-spherical structure;
   a metal oxide powder material having a non-hollow structure;
   a metal oxide fiber material;
   an alkali metal silicate; and
   water;
   the composition comprising at least sodium silicate and potassium silicate as the alkali metal silicate,
   the hollow powder material having an average particle size within the range of 5 µm to 40 µm, a bulk specific gravity within the range of 0.14 to 0.95 g/cm³, and a pressure strength of not less than 10 MPa.
(2) The aqueous composition according to (1), wherein the metal oxide powder material has an average particle size within the range of 1 µm to 15 µm, and a true density of not more than 3.6.
(3) The aqueous composition according to (1) or (2), wherein the inorganic oxide fiber is at least one selected from the group consisting of potassium titanate whisker, wollastonite, and acicular titanium oxide.
(4) The aqueous composition according to any one of (1) to (3), further comprising a polyimide resin, wherein the polyimide resin is added at a ratio within the range of 3 to 50 parts by weight with respect to 100 parts by weight of the alkali metal silicate in a thermoset film.
(5) The aqueous composition according to any one of (1) to (4), wherein, when the water content in the aqueous composition is taken as 100 parts by weight, the content of the hollow powder material is 8 parts by weight to 75 parts by weight; the content of the metal oxide powder material is 5 parts by weight to 70 parts by weight; the content of the metal oxide fiber material is 3 parts by weight to 35 parts by weight; and the content of the alkali metal silicate is 80 parts by weight to 175 parts by weight.
(6) The aqueous composition according to any one of (1) to (5), wherein the aqueous composition is a two-part liquid system aqueous composition comprising:
   a first liquid composed of an adhesive solution that comprises at least the alkali metal silicate; and
   a second liquid that is an aqueous dispersion comprising the hollow powder material, the metal oxide powder material, and the metal oxide fiber material, or an aqueous dispersion comprising, in addition to the above aqueous dispersion, at least one kind of the alkali metal silicate.
(7) The aqueous composition according to any one of (1) to (6), wherein a dispersant for dispersing the hollow powder material, the metal oxide powder material, and the metal oxide fiber material is added to the water, or to a liquid comprising the water and at least one of the sodium silicate and the potassium silicate.
(8) The aqueous composition according to (7), wherein the dispersant is an aqueous anionic polymer, and the amount of the aqueous anionic polymer added is 0.1 to 3.0% by weight with respect to the total weight of the hollow powder material, the metal oxide powder material, and the metal oxide fiber material.
(9) A cured product of the aqueous composition according to any one of (1) to (8).
(10) The cured product according to (9), in the form of a film formed on a metal base material.
(11) A structure comprising:
   a metal base material; and
   a film composed of the cured product according to (10), formed on the metal base material.
(12) The structure according to (11), wherein the metal base material is composed of an aluminum alloy material, and the content of the alkali metal silicate in the cured product is not more than 40% by volume with respect to the total volume of the cured product.
(13) The structure according to (11) or (12), wherein the film composed of the cured product is composed of: a first cured-product layer that is in direct contact with the metal base material; and a second cured-product layer formed on the first cured-product layer; wherein the volume ratio of the solid component derived from the alkali metal silicate contained in the second cured-product layer is 1.05 to 2.0 times the volume ratio of the solid component derived from the alkali metal silicate contained in the first cured-product layer.

### EFFECT OF THE INVENTION

The aqueous composition of the present invention is a composition which can be used for a base material surface by application, which is resistant to high temperature and high-frequency impact, which provides a film surface strength enough to withstand the combustion pressure and the fuel injection pressure, and which is capable of forming a cured-product film having a low specific heat and a low thermal conductivity. Further, the composition is capable of film formation not only on an aluminum alloy base material, but also on a metal base material such as an iron base material or a titanium base material.

### MODE FOR CARRYING OUT THE INVENTION

### (1) Hollow Powder Material

As described above, the aqueous composition of the present invention is composed of a silicon dioxide compound, and comprises a hollow powder material having specific properties. The term "silicon dioxide compound" herein means a compound comprising not less than 50% by weight silicon dioxide. The term "hollow" may mean either a porous state or the presence of a single spherical void. Preferred examples of the hollow powder material composed of a silicon dioxide compound include, but are not limited to, shirasu balloons, fly ash balloons, and borosilicate glass balloons. Borosilicate glass balloons are especially preferred.

From the viewpoint of the thermal insulation properties of the cured product, the bulk specific gravity of the hollow powder material is within the range of 0.14 to 0.95 g/cm³, preferably within the range of 0.17 to 0.50 g/cm^{3.} Given that the normal thickness of the cured film is 30 µm to 100 µm, the average particle size of the hollow powder material (in terms of the median diameter D50; "average particle size" is hereinafter mentioned in terms of D50 unless otherwise specified) is 5 µm and 40 µm, preferably 5 µm and 25 µm. In cases where the average particle size is less than 5 µm, the ratio of the internal space volume is relatively small, so that the production of the thermal insulation efficiency based on the hollow structure may be insufficient depending on the composition and the outer shell thickness of the hollow particles. On the other hand, in cases where the average particle size exceeds 40 µm, the particle size affects the smoothness of the film surface, and also affects, for example, clogging of the nozzle during spray coating, which is not preferred.

The pressure strength of the hollow powder material is not less than 10 MPa, preferably not less than 20 MPa. A cured product having high surface strength can be obtained in cases where the pressure strength is not less than 10 MPa. Although there is no upper limit of the pressure strength of the hollow powder material, the pressure strength is usually not more than about 180 MPa.

### (2) Non-Hollow Metal Oxide Powder Material

The composition of the present invention comprises a metal oxide powder material having a non-hollow structure. The metal oxide powder material having a non-hollow structure functions as an inorganic filler. The metal oxide powder material has a true density of preferably not more than 3.6, more preferably not more than 3.0, from the viewpoint of preventing sedimentation during storage of a composition having a viscosity suitable for application. Although there is no lower limit of the true density, the true density of the metal oxide powders is usually not less than about 2.0.

Specific examples of such a non-hollow metal oxide powder material having a true density of not more than 3.6 include, but are not limited to, cristobalite, kaolin, talc, amorphous silica, cordierite, steatite, mica, forsterite, vermiculite, sepiolite, glass flakes, potassium titanate, and magnesium titanate.

Many of these materials comprise silica, and ceramic particles having a particle size of not more than 10 µm have recently been increasingly tightly regulated in terms of their use concentrations since they may be incorporated into alveoli. This is especially the case for crystalline silica from the safety point of view because of its possible carcinogenicity and the like. In working methods in which the film formation process involves scattering of a coating, such as spray coating, crystalline silica, whose occupational exposure limit concentration is set to 0.03 mg/m³ from the safety point of view, is preferably used in the minimum amount, or used only in working methods in which measures against the exposure are taken. In order to reduce the content of the crystalline silica, it is preferred to replace it with kaolin, which contains only a small amount of crystalline silica, or with a material whose occupational exposure limit concentration is not less than 0.1 mg/m³, such as amorphous silica or talc. The restriction by the exposure limit concentration largely varies depending on the working method during the film formation. Cristobalite or the like comprising a large amount of the crystalline silica component may also be used without a problem as long as the working method is a method which does not involve extensive scattering of a coating, such as dipping or brushing, or in which, even in cases of spray coating, measures against the exposure are taken.

The average particle size of the non-hollow metal oxide powder material is preferably 1 µm to 15 µm, more preferably 2 µm to 8 µm. In cases where the average particle size is not less than 1 µm, the function of the aggregate supporting the cured film can be favorably exerted. On the other hand, in cases where the average particle size is not more than 15 µm, sedimentation in a liquid phase can be suppressed. In cases where the average particle size is 2 µm to 8 µm, formation of a close-packed structure with the hollow powder material can be easily achieved, which is especially preferred.

The mixing ratio of the filler particles having the preferred particle size range of 1 to 15 µm in the cured film product is preferably within the range of 7 parts to 100 parts with respect to 100 parts by weight of the solid component obtained by heating the aqueous silicate solution at 200°C for 2 hours. In cases where the mixing ratio is less than 7 parts, the resulting thermal shock resistance of the film may be insufficient, while in cases where the mixing ratio is more than 100 parts, the film cannot have a self-supporting property, so that cracking, detachment, chalking, and the like may be found, which is inappropriate. Taking into account also other thermal insulation properties and the like, a lower filler ratio is preferred, and the upper limit of the mixing ratio is more preferably 75 parts.

### (3) Metal Oxide Fiber Material

The composition of the present invention also comprises a metal oxide fiber material. The metal oxide fiber material is preferably at least one selected from the group consisting of potassium titanate whisker, wollastonite, and acicular titanium oxide. The metal oxide fiber has a length of preferably not more than 25 µm, and an aspect ratio of preferably about 5 and 15, especially preferably about 8 to 12. Although there is no lower limit of the length of the metal oxide fiber, the length is usually not less than about 4 µm. Such a metal oxide fiber material is commercially available, and the commercially available product may be preferably used. Specific examples of the commercially available product include "TISMO N" and "TISMO D", manufactured by Otsuka Chemical Co., Ltd., "FTL300", manufactured by Ishihara Sangyo Kaisha, Ltd., and "KGP-H85", manufactured by Kansai Matec Co., Ltd.

By dispersing the metal oxide fiber material in the composition, the metal oxide fiber material can be three-dimensionally arranged in the film after the curing of the composition, to increase the strength of the film.

The composition of the present invention also comprises an alkali metal silicate. The alkali metal silicate comprises at least sodium silicate and potassium silicate. By the inclusion of the alkali metal silicate, the cured product can be given a high-temperature-environment resistance effect by which the product can withstand a normal working temperature of not less than 300°C.

The ratio between the sodium silicate and the potassium silicate is not limited, and the ratio of the potassium silicate is preferably 50 parts by weight to 400 parts by weight, more preferably 100 parts by weight to 200 parts by weight, with respect to 100 parts by weight of the sodium silicate.

Examples of the sodium silicates that may be used include sodium silicates such as sodium disilicate and sodium tetrasilicate, which may be used individually or as a mixture. As the sodium silicate, a commercially available product may be used. Examples of the commercially available product include J Sodium Silicate No.1, 58 Sodium silicate No.1, 53 Sodium Silicate No.1, 50 Sodium Silicate No.1, 47 Sodium Silicate No. 1, 38 Sodium Silicate No.1, 48 Sodium Silicate No.2, 45 Sodium Silicate No.2, 43 Sodium Silicate No. 2, J Sodium Silicate No.3, and Sodium Silicate No.4 (all of which are manufactured by Nippon Chemical Industrial Co., Ltd.). Among these, for example, J Sodium Silicate No. 1 is an aqueous sodium silicate solution containing sodium silicate at a concentration of 54.5% by weight.

Examples of the potassium silicate include potassium hydrogen disilicate (potassium tetrasilicate) and potassium disilicate. These potassium silicates may be used individually or as a mixture. As the potassium silicate, a commercially available product may be used. Examples of the commercially available product include 2K Potassium Silicate, A Potassium Silicate, B Potassium Silicate, C Potassium Silicate, and 1K Potassium Silicate (all of which are manufactured by Nippon Chemical Industrial Co., Ltd.). Among these, for example, 2K Potassium Silicate is an aqueous potassium silicate solution containing potassium silicate at a concentration of 30% by weight.

Although the alkali metal silicate may be composed only of sodium silicate and potassium silicate, it may also comprise an alkali metal silicate other than sodium silicate and potassium silicate as long as the effect of the present invention is not impaired. Examples of such an alkali metal silicate include lithium silicate. The mixing ratio of the alkali metal silicate other than sodium silicate and potassium silicate is not limited as long as the effect of the present invention is not impaired. The ratio is usually not more than 10% by weight with respect to the alkali metal silicates.

The composition of the present invention comprises water as a dispersion medium. Thus, the composition of the present invention is aqueous.

The composition of the present invention preferably also comprises a polyimide resin. By the inclusion of the polyimide resin, brittleness of the cured film can be improved, and the impact resistance and the thermal shock resistance can be improved. The amount of the polyimide resin added is preferably within the range of 3 to 50 parts by weight with respect to 100 parts by weight of the alkali metal silicate in the thermoset film.

Since the internal combustion engine environment is at more than 300°C during the normal use, the polyimide resin used is preferably of a grade having excellent heat resistance. More specifically, the 5%-weight-loss temperature of the polyimide material is preferably not less than 400°C from the viewpoint of the normal working temperature of the film. Such a polyimide resin preferably has a shape which allows addition of the resin to the aqueous coating. For example, a polyimide powder having an average particle size of not more than 30 µm, which can be used as a raw material for the production of a compression-molded body of the polyimide resin, may be employed, or the polyimide resin may be in the form of a polyimide varnish or the like dissolved in water, which can be added to the aqueous coating. More specifically, an aqueous polyamic acid solution is also preferred since its conversion to polyimide occurs by adding it to an aqueous coating followed by heating. The polyimide powder raw material may be the general-purpose powder material described above, or may be prepared from the varnish material. Although a commercially available polyimide resin varnish is generally in the state of a solution in a solvent such as NMP, the above aqueous polyamic acid solution, which uses water instead of NMP as the solvent, may also be used. These varnishes may be, for example, heat-cured and then made into powders before use. Polyamic acid, which undergoes imidization to become polyimide during heat curing, is regarded as corresponding to the "polyimide resin" in the present invention.

Examples of the polyimide powder that exhibits heat resistance include the P84 grade, manufactured by Evonik, and the UIP series, manufactured by UBE Corporation. Examples of the aqueous polyimide solution include SC-1901, manufactured by DSP Gokyo Food & Chemical Co., Ltd., and UPIANF, manufactured by UBE Corporation. Examples of the polyimide varnishes which can be made into powders and which show high heat resistance include UPIAAT and ST, manufactured by UBE Corporation, and U-Imide, manufactured by Unitika Ltd.

For powder materials and the like that have already been imidized, such as the polyimide powders described above, the heat-curing temperature is not limited. However, in cases of the water-soluble polyimide varnish, heating to a temperature required for imidization, which is about 200°C to 300°C, is preferably performed during the heat curing of the film after the addition of the water-soluble polyimide varnish to the aqueous composition. In cases of the varnish, such heating is preferably performed during the heat curing for making it into the powder.

In cases where, for example, a powder-like material is used rather than the varnish or the like as the polyimide resin, it is preferred to use a powder having a particle size of not more than 30 µm in view of the limitation of the thickness of the thermal insulation film. It is more preferred to employ a fine powder having an average particle size of not more than 10 µm since, even when the fine powder is added only in a small amount, it is dispersed throughout the film without showing unevenness, to exhibit the effect. Examples of such a fine powder that may be employed include, but are not limited to, "UIP-S (average particle size, 8 µm)" and "UIP-R (average particle size, 7 µm)", manufactured by UBE Corporation. It has also been found that, by using the polyimide varnish, the aqueous polyamic acid solution, or the like, the polyimide resin can be uniformly dispersed in the coating, and hence that the effect can be produced even in cases where it is added only in a small amount.

The mixing ratios of the components in the composition of the present invention are as follows: when the water content in the composition is taken as 100 parts by weight, the content of the hollow powder material is preferably 8 parts by weight to 75 parts by weight; the content of the metal oxide powder material is preferably 5 parts by weight to 70 parts by weight; the content of the metal oxide fiber material is preferably 3 parts by weight to 35 parts by weight; and the content of the alkali metal silicate is preferably 80 parts by weight to 175 parts by weight.

The composition of the present invention may be used as one liquid containing all the components described above. On the other hand, in cases where the usable time after the production of the liquid agent is to be prolonged, an aqueous dispersion may be prepared with only the components excluding the silicate component, to provide a first liquid, and the silicate component as a second liquid may be mixed with the first liquid before the use of the coating. By employing such a two-liquid system, the usable time of the composition may be prolonged.

In such a composition employing the two-liquid system, a component may be preliminarily dispersed in the second liquid, that is, in the silicate side, as long as the component is not a component such as a boron component that causes curing reaction of the silicate, and as long as the component is not a component such as amorphous silica that exhibits solubility in a strong alkali. To the first aqueous dispersion, which is prepared without the silicate component, the silicate component may be preliminarily partially added. More specifically, even in cases where the first aqueous dispersion comprises a boron component or an alkaline soluble component, curing-accelerating action by the boron or dissolution of the amorphous silica or the like may hardly occur depending on the concentration of the partially added silicate. As a result, the usable time may be hardly affected.

The aqueous composition may also be a two-part liquid system aqueous composition comprising:
a first liquid composed of an adhesive solution that comprises at least the alkali metal silicate; and
a second liquid that is an aqueous dispersion comprising the hollow powder material, the metal oxide powder material, and the metal oxide fiber material, or an aqueous dispersion comprising, in addition to the above aqueous dispersion, at least one kind of the alkali metal silicate.

In cases where such measures are taken, the two-liquid-type coating provided can create a state where the inside of the porous structure of the filler is penetrated by the silicate component preliminarily partial included in the first liquid, to create a state that allows the second liquid component, which is added later, to penetrate even within a short time.

A dispersant for dispersing the hollow powder material, the metal oxide powder material, and the metal oxide fiber material may be added to the water, or to the liquid comprising the water and at least one of the sodium silicate and the potassium silicate. Preferred examples of the dispersant include aqueous anionic polymers. Examples of the aqueous anionic polymers include water-soluble poly(meth)acrylates. Such dispersants are commercially available as anionic surfactants and the like (such as the Aron grade, manufactured by Toagosei Co., Ltd.; and the NOPLAX grade and the SN-Dispersant grade, manufactured by San Nopco Ltd.), and the commercially available products may be preferably employed (see the Examples below). The amount of such a dispersant added is preferably 0.1 to 3.0% by weight with respect to the total weight of the hollow powder material, the metal oxide powder material, and the metal oxide fiber material.

Since the aqueous composition of the present invention comprises various oxide particles, use of the so-called polymer-type dispersant is effective as described above. Further, since the presence of the oxide particles in the aqueous composition tends to cause trapping of bubbles, an antifoaming agent or the like may be used. Preferred examples of the antifoaming agent include the Noptam grade and the SN-Defoamer grade, manufactured by San Nopco Ltd. Since these antifoaming agents are commercially available, the commercially available products may be preferably used. The amount of the antifoaming agent added is not limited, and may be appropriately set. The amount is usually about 0.1% by weight to 1.0% by weight with respect to the total amount of the aqueous composition.

In cases where the aqueous composition is used for film formation on a metal base material or the like, insufficient degreasing or roughening of the base material may lead to insufficient wettability of the base material. In such cases, an additive called wetting agent, which promotes reduction of the surface tension, may be additionally used. Preferred examples of the wetting agent include the SN-Wet grade, manufactured by San Nopco Ltd. Since the wetting agents are commercially available, the commercially available products may be preferably used. The amount of the wetting agent added is not limited, and may be appropriately set. The amount is usually about 0.1% by weight to 1.0% by weight with respect to the total amount of the aqueous composition.

The composition of the present invention may be applied to the inner wall surface of the combustion chamber of an internal combustion engine. By heating the applied composition, a film of the composition of the invention is formed on the application surface.

The application can be carried out by a well-known method such as spray coating, spin coating, dipping, or brushing. Among these, spray coating is usually preferred. In cases where the application surface is preliminarily subjected to roughening by physical roughening such as grit blasting or by chemical roughening such as wet etching, uniform film formation by the composition can be easily achieved on the application surface, which is preferred. Further, since the composition of the present invention is an aqueous composition, the application surface preferably has no oil adhering thereto. Therefore, the application surface is preferably subjected to degreasing and washing before the application.

In cases where the application is carried out by spray coating, the composition preferably has a viscosity of 40 cps to 120 cps at 25°C. In cases where the viscosity is not more than 120 cps, a stable spraying action can be achieved during the spraying. In cases where the viscosity is not less than 40 cps, sedimentation of components hardly occurs during storage, which is preferred.

The heating temperature is preferably 150°C to 250°C. However, since the composition of the present invention is aqueous, and hence contains water, heating at 150°C to 250°C from the beginning leads to occurrence of the so-called "skinning" by entrapment of water since curing of the surface first occurs. This may lead to formation of voids due to evaporation of the water, or detachment at the interface. In order to prevent this, it is preferred to employ a two-stage heating in which water is evaporated at a temperature of not more than 100°C such as 50 to 70°C, followed by heating at 150°C to 250°C.

The film after the curing has a film thickness of preferably 30 µm to 100 µm, especially preferably 30 µm to 70 µm. In cases where the film thickness is not more than 100 µm, preferably not more than 70 µm, the heat capacity of the film is not too high, and errors hardly occur in the physical properties of the film under various cycle environments such as high-temperature, high-compression, and high-frequency-vibration environments, which is preferred. Further, in cases where the film thickness is not less than 30 µm, a smooth film surface can be obtained, which is preferred. In order for the cured film to achieve a film thickness of 30 µm to 100 µm, the film thickness at the time of the application before the heating is preferably about 45 µm to 150 µm.

Even in cases where the base material (application surface) is composed of an aluminum alloy material, components of the composition of the present invention do not excessively react with the aluminum alloy of the base material during use, so that embrittlement of the surface layer of the base material does not occur. Therefore, the composition can be used without a problem even in cases where the base material is composed of an aluminum alloy material. However, in cases where the base material is composed of an aluminum alloy material, the content of the alkali metal silicate in the cured product is preferably not more than 40% by volume with respect to the total volume of the cured product, from the viewpoint of preventing embrittlement of the surface layer.

The cured film may have a double-layer structure containing different amounts of the alkali metal silicate. This is especially preferred in cases where the base material is an aluminum alloy base material. More specifically, after forming a first cured-product layer that is in direct contact with the base material, a second cured-product layer is formed on the first cured-product layer. In this case, the volume ratio of the solid component derived from the alkali metal silicate contained in the second cured-product layer is preferably within the range of 1.05 to 2.0 times the volume ratio of the solid component derived from the alkali metal silicate contained in the first cured-product layer. Further, in this case, the content of the alkali metal silicate in the first cured-product layer is preferably not more than 40% by volume with respect to the total volume of the cured product, as described above. By this, embrittlement of the surface of the aluminum alloy base material due to an alkaline component can be prevented while a cured-film structure suitable for obtaining a pressure resistance and a fuel-injection-pressure resistance can be achieved by a sufficient concentration of the alkali metal silicate in the second cured product.

The aqueous composition of the present invention is a thermal insulation film that can be used in the vicinity of an internal combustion engine since it has high heat resistance, high thermal shock resistance, and properties that allow the composition to withstand various high-frequency vibrations. Moreover, it shows excellent adhesion to metals. Therefore, for example, the composition can be used in various applications as a thermal insulation film for a metal base material in an environment in which the normal working temperature is as high as not less than 250°C, and hence in which use of an organic film is difficult.

For example, the composition may be used as a thermal insulation layer on the inner wall of an exhaust such as an exhaust pipe or exhaust manifold placed in the vicinity of an internal combustion engine or the like. More specifically, in general, a three-way catalyst or the like is used for the purpose of removing HC, CO, and Nox from the exhaust gas, but warming of the catalyst may be insufficient when, for example, the engine has just started. This may lead to insufficient production of the activity of the catalyst. In this case, by forming a thermal insulation layer on the inner wall of the exhaust, the cooling loss of the amount of heat in the exhaust gas immediately after the start of the engine can be reduced to enable early warming of the catalyst, to thereby achieve early production of the purifying action. This may be assumed as one example of the object of the invention.

The present invention is concretely described below based on Examples. However, the present invention is not limited to the following Examples. The submerged densities described below are those for the various oxide particles and fibers in the aqueous composition of the present invention. Since the commonly used bulk density or true density cannot accurately take into account how the density is affected by the solution incorporated into the openings in the surface area of the particles and fibers and by the void portions in the closed structure into which the solution cannot enter, the density of each material in water was calculated by the following method. More specifically, a predetermined weight of each kind of oxide particles or fibers were separately placed in a predetermined weight of water, and the particles or fibers were sufficiently dispersed and defoamed to obtain a dispersion solution in which water penetrated into the openings. Thereafter, the volume and the weight of the dispersion solution were compared with the volume and the weight of water, to determine the submerged density of each kind of particles or fibers in water.

### Example 1

A mixture of 30 g of an aqueous sodium silicate solution (J Sodium Silicate No. 1), 30 g of an aqueous potassium silicate solution (2K Potassium Silicate), and 40 g of pure water was prepared, and the mixture was sufficiently stirred to prepare an aqueous alkali metal silicate solution. To the aqueous silicate solution in an amount equivalent to 28 g in terms of the solid-component weight measured after heating the aqueous alkali metal silicate solution at 200°C for 2 hours, 12 g of kaolin having an average particle size of 5 µm, a bulk specific gravity of 0.21 g/cm³, and a submerged density of 2.54 g/cm³ (5M Kaolin, manufactured by Takehara Kagaku Kogyo Co., Ltd.), 12 g of borosilicate glass hollow particles having an average particle size of 16 µm, a bulk specific gravity of 0.30 g/cm³, and a submerged density equivalent to 0.59 g/cm³ (iM30K, manufactured by 3M; pressure strength = 186 MPa), and 5 g of potassium titanate fibers having a bulk density of 0.62 g/cm³ and a submerged density equivalent to 2.41 g/cm³ (TISMO D, manufactured by Otsuka Chemical Co., Ltd.) were added while the aqueous alkali metal silicate solution was stirred. After confirming that the metal oxide powder was sufficiently dispersed by sufficient stirring, the rotation speed for the stirring was increased, and the stirring was continued to obtain an aqueous composition of the present invention. In addition, aqueous compositions were prepared by the same method as described above except that the following was used as the hollow particles instead of iM30k: S32HS, having an average particle size of 25 µm (pressure strength = 41 MPa), iM16k, having an average particle size of 20 µm (pressure strength = 110 MPa), or S28HS, having an average particle size of 30 µm (pressure strength = 21 MPa), each of which is manufactured by the same manufacturer, 3M, as hollow particles having an average particle size within the particle size range described above, but having a different pressure strength; or borosilicate glass balloons having an average particle size of 12 µm (110P8, manufactured by Potters-Ballotini Co., Ltd.; pressure strength = 69 MPa) made of the same compound as the above hollow particles manufactured by 3M. By this, mixed solutions using the hollow particles having the different pressure strengths were obtained. Subsequently, each mixed solution was transferred to a ball mill, and mixed for 120 minutes. The liquid temperature during the mixing was controlled within the range of 20°C to 30°C. During the ball-milling, defoaming was briefly carried out. Five kinds of mixed solutions were thus prepared to provide thermal insulation coatings.

Subsequently, each thermal insulation coating was sprayed onto the aluminum base material (200 mm × 100 mm × 4 mm (thickness)) to form a film such that the film thickness after the heat curing was adjusted to 60 µm. Subsequently, heat was applied to the film at 200°C/2 hrs to allow film formation, to obtain a thermal insulation film. Subsequently, a heat load was applied to the film at 300°C/5 hours.

### Comparative Example 1

Two kinds of liquid agents were obtained by adding the materials at the same ratios and employing the same production method as in Example 1 except that shirasu balloons (Shirafine ISM-F015, manufactured by Igawa Sangyo K. K.; pressure strength = 8 MPa) or borosilicate glass balloons (25P45, manufactured by Potters-Ballotini Co., Ltd.; pressure strength = 5 MPa) having weaker pressure strength were used as the hollow particles. Film formation was carried out by the same method as in Example 1, and the heat load was applied to obtain two kinds of films of the Comparative Example.

Subsequently, the films of Example 1 and Comparative Example 1 after the heat load were subjected to a DuPont falling ball impact test according to JIS K5600, wherein the impact resistance of each film was investigated after dropping a 500-g steel ball from a height of 500 mm. The condition of each film was evaluated on a 6-point scale according to JIS K5600-8. The results are shown in Table 1.

**[Table 1]**

| "Heat resistance/impact resistance; external appearance" | | | | | |
|---|---|---|---|---|---|
| Hollow particle name | S28HS | S32HS | 110P8 | iM16k | iM30k |
| Average particle size | 30 µm | 25 µm | 12 µm | 20 µm | 16 µm |
| Pressure strength | 21 MPa | 41 MPa | 69 MPa | 110 MPa | 186 MPa |
| External appearance after dropping impact test | 2 | 2 | 2 | 1 | 1 |
| | Absence of detachment and floating; presence of cracking | Absence of detachment, floating, and cracking | Absence of detachment, floating, and cracking | Absence of detachment, floating, and cracking | Absence of detachment, floating, and cracking |
| Result | Δ Acceptable | ○ Acceptable | ○ Acceptable | ⊚ Acceptable | ⊚ Acceptable |

Table 2 shows a summary of the results of the heat resistance/impact resistance test of the two kinds of films of Comparative Example 1.

**[Table 2]**

| Comparative Example 1 | | |
|---|---|---|
| Hollow particle name | 25P45 | 1SM-F015 |
| Pressure strength | 5 MPa | 8 MPa |
| External appearance after dropping impact test | 4 | 4 |
| | Presence of detachment and cracking | Presence of detachment and cracking |
| Result | × Unacceptable | × Unacceptable |

As shown in Table 1 and Table 2, the films heated at 300°C showed a correlation between the pressure strength of the hollow particles used and the impact resistance of the film. It was thus confirmed that a certain level of impact resistance can be obtained by using particles having a pressure strength of not less than 20 MPa.

### Example 2

A mixture of 30 g of an aqueous sodium silicate solution (J Sodium Silicate No. 1), 30 g of an aqueous potassium silicate solution (2K Potassium Silicate), and 40 g of pure water was prepared, and the mixture was sufficiently stirred to prepare an aqueous alkali metal silicate solution. To the aqueous silicate solution in an amount equivalent to 28 g in terms of the solid-component weight measured after heating the aqueous alkali metal silicate solution at 200°C for 2 hours, 12 g of kaolin having a bulk specific gravity of 0.21 g/cm³ and a submerged density of 2.54 g/cm³ (5M Kaolin, manufactured by Takehara Kagaku Kogyo Co., Ltd.), 12 g of borosilicate glass hollow particles having a bulk specific gravity of 0.30 g/cm³ and a submerged density equivalent to 0.59 g/cm³ (iM30K, manufactured by 3M; pressure strength = 186 MPa), and 5 g of potassium titanate fibers having a bulk density of 0.62 g/cm³ and a submerged density equivalent to 2.41 g/cm³ (TISMO D, manufactured by Otsuka Chemical Co., Ltd.) were added while the aqueous alkali metal silicate solution was stirred. After confirming that the metal oxide powder was sufficiently dispersed by sufficient stirring, the rotation speed for the stirring was increased, and the stirring was continued to obtain an aqueous composition of the present invention. In addition, aqueous compositions were prepared by the same method as described above except that ASP-400P, 5M Kaolin, E-75, P-3, POAG, or FF-200, each of which has an average particle size within the particle size range of the filler described above, was used as the filler instead of the cristobalite. By this, mixed solutions using the different fillers were obtained. Subsequently, each mixed solution was transferred to a ball mill, and mixed for 120 minutes. The liquid temperature during the mixing was controlled within the range of 20°C to 30°C. During the ball-milling, defoaming was briefly carried out. Six kinds of mixed solutions were thus prepared to provide thermal insulation coatings.

### Example 3

The four kinds of mixed solutions of Example 2 after the preparation were stored by being left to stand at 40°C for 24 hours, and then the sedimentation condition of the filler was investigated. The results are shown below in Table 3.

**[Table 3]**

| Example 3 | | | | | | |
|---|---|---|---|---|---|---|
| Filler used | 5M Kaolin | Cristobalite | ASP400P (Hydrous kaolin) | E-75 (Amorphous silica) | Talc PAOG | Forsterite FF-200 |
| Average particle size | 5 µm | 4 µm | 3.5 µm | 5 µm (secondary particles) | 5 µm | 2.5 µm |
| Bulk density | 0.36 | 0.58 | 0.51 | 0.24 | 0.15 | 0.99 |
| Submerged density g/cm³ | 2.54 | 2.16 | 2.43 | 1.66 | 0.43 | 3.09 |
| True specific gravity | 2.6 | 2.3 | 2.6 | 2.0 | 2.7 | 3.29 |
| Sedimentation / aggregation at 40°C / Hour 24 | Slight sedimentation | Slight sedimentation | Slight sedimentation | Slight sedimentation | No sedimentation | Slight sedimentation |
| | No reaggregation | No reaggregation | No reaggregation | No reaggregation | No reaggregation | No reaggregation |
| Sedimentation / aggregation at 40°C / Week 4 | Presence of sediment | Presence of sediment | Presence of sediment | Slight sedimentation | No sedimentation | Presence of sediment |
| | Easy dispersion by stirring | Easy dispersion by stirring | Easy dispersion by stirring | No reaggregation | No reaggregation | Easy dispersion by stirring |

### Example 4

A mixture of 30 g of an aqueous sodium silicate solution (J Sodium Silicate No. 1), 30 g of an aqueous potassium silicate solution (2K Potassium Silicate), and 40 g of pure water was prepared, and the mixture was sufficiently stirred to prepare an aqueous alkali metal silicate solution. To the aqueous silicate solution in an amount equivalent to 28 g in terms of the solid-component weight measured after heating the aqueous alkali metal silicate solution at 200°C for 2 hours, 12 g of kaolin having a bulk specific gravity of 0.21 g/cm³ and a submerged density of 2.54 g/cm³ (5M Kaolin, manufactured by Takehara Kagaku Kogyo Co., Ltd.), different amounts (5 g / 9 g / 13 g / 17 g / 22 g) of borosilicate glass hollow particles having a bulk specific gravity of 0.30 g/cm³ and a submerged density equivalent to 0.59 g/cm³ (iM30K, manufactured by 3M; pressure strength = 186 MPa), and 5 g of potassium titanate fibers having a bulk density of 0.62 g/cm³ and a submerged density equivalent to 2.41 g/cm³ (TISMO D, manufactured by Otsuka Chemical Co., Ltd.) were added while the aqueous alkali metal silicate solution was stirred. After confirming that the metal oxide powder was sufficiently dispersed by sufficient stirring, the rotation speed for the stirring was increased, and the stirring was continued to obtain five kinds of aqueous compositions of the present invention. Subsequently, each mixed solution was transferred to a ball mill, and mixed for 120 minutes. The liquid temperature during the mixing was controlled within the range of 20°C to 30°C. During the ball-milling, defoaming was briefly carried out. Five kinds of mixed solutions, containing the different amounts of the hollow material, were thus prepared to provide thermal insulation coatings.

Subsequently, each thermal insulation coating was sprayed onto the aluminum base material (200 mm × 100 mm × 4 mm (thickness)) to form a film such that the film thickness after the heat curing was adjusted to 60 µm. Subsequently, heat was applied to the film at 200°C/2 hrs to allow film formation, to obtain a thermal insulation film. Subsequently, a heat load was applied to the film at 300°C/5 hours.

### Example 5

Each of the films after the application of the heat load, obtained from the mixed solutions of Example 4, was subjected to calculation of the thickness and the weight of the film according to JIS K5600-1-7: 2014 General Test Methods for Coatings, 5 Measurement of the Dry Film Thickness, 5.3 Mass Method, to determine the density. At the same time, the condition of each film was evaluated on a 6-point scale according to JIS K5600-8. In particular, the chalking condition of the film was investigated by evaluation on a 6-point scale based on "Chalking Grade (Tape Method)" in the JIS K 5600-8-1 test. The results are shown below in Table 4.

**[Table 4]**

| Example 5 | | | | | |
|---|---|---|---|---|---|
| Amount of hollow material added | 5 g | 9 g | 13 g | 17 g | 22 g |
| Weight ratio of hollow material to 100 parts of Silicate solid | 17.9 parts | 32.2 parts | 46.4 parts | 60.7 parts | 78.6 parts |
| Apparent density of film | 1.63 g/cm³ | 1.44 g/cm³ | 1.31 g/cm³ | 1.21 g/cm³ | 1.12 g/cm³ |
| External appearance of film | 1 | 1 | 1 | 1 | 2 |
| | Absence of cracking and detachment | Absence of cracking and detachment | Absence of cracking and detachment | Absence of cracking and detachment | Presence of cracking in edge portions; absence of detachment |
| Observation of chalking by the tape method | 1 | 1 | 1 | 1 | 2 |
| Total evaluation | ○ Acceptable | ⊚ Acceptable | ⊚ Acceptable | ○ Acceptable | Δ Acceptable |

As shown by the results in Table 4, favorable films could be obtained even after the heat load in the cases where the weight ratio of the hollow material to 100 parts by weight of the solid component derived from the aqueous silicate solution was within the range of 5 g to 22 g.

### Example 6

A mixture of 30 g of an aqueous sodium silicate solution (J Sodium Silicate No. 1), 30 g of an aqueous potassium silicate solution (2K Potassium Silicate), and 40 g of pure water was prepared, and the mixture was sufficiently stirred to prepare an aqueous alkali metal silicate solution. To the aqueous silicate solution in an amount equivalent to 28 g in terms of the solid-component weight measured after heating the aqueous alkali metal silicate solution at 200°C for 2 hours, 12 g of kaolin having a bulk specific gravity of 0.21 g/cm³ and a submerged density of 2.54 g/cm³ (5M Kaolin, manufactured by Takehara Kagaku Kogyo Co., Ltd.), 12 g of borosilicate glass hollow particles having a bulk specific gravity of 0.30 g/cm³ and a submerged density equivalent to 0.59 g/cm³ (iM30K, manufactured by 3M; pressure strength = 186 MPa), and 5 g of potassium titanate whisker having a bulk density of 0.62 g/cm³ and a submerged density equivalent to 2.41 g/cm³ (TISMO D, manufactured by Otsuka Chemical Co., Ltd.) were added while the aqueous alkali metal silicate solution was stirred. After confirming that the metal oxide powder was sufficiently dispersed by sufficient stirring, the rotation speed for the stirring was increased, and the stirring was continued to obtain an aqueous composition of the present invention. In addition, aqueous compositions were prepared by the same method as described above except that "FTL-300 (fiber length, 5.15 µm)", which is acicular titanium oxide manufactured by Ishihara Sangyo Kaisha, Ltd., or "KGP-H85 (fiber length, 8 µm)", which is wollastonite manufactured by Kansai Matec Co., Ltd., was used as the inorganic fiber instead of the potassium titanate whisker. By this, mixed solutions using the different inorganic fibers were obtained. Subsequently, each mixed solution was transferred to a ball mill, and mixed for 120 minutes. The liquid temperature during the mixing was controlled within the range of 20°C to 30°C. During the ball-milling, defoaming was briefly carried out. Three kinds of mixed solutions were thus prepared to provide thermal insulation coatings.

### Comparative Example 2

One kind of thermal insulation coating was obtained by adding the materials at the same ratios and employing the same production method as in Example 5 except that the inorganic fibers in Example 6 were not added.

Subsequently, the three kinds of liquid agents of Example 6 and the one kind of liquid agent of Comparative Example 2 were used for film formation by spraying each thermal insulation coating onto the aluminum base material (200 mm × 100 mm × 4 mm (thickness)) such that the film thickness after the heat curing was adjusted to 60 µm. Subsequently, heat was applied to the film at 200°C/2 hrs to allow film formation, to obtain a thermal insulation film. Subsequently, a heat load was applied to the film at 300°C/5 hours.

### Example 7

The films obtained from the three kinds of mixed solutions of Example 6 and the one kind of mixed solution of Comparative Example 2 after the heat load were subjected to a DuPont falling ball impact test according to JIS K5600, wherein the impact resistance of each film was investigated after dropping a 500-g steel ball from a height of 500 mm. The condition of each film was evaluated on a 6-point scale according to JIS K5600-8. The results are shown in Table 5.

**[Table 5]**

| Impact resistance; external appearance | | | |
|---|---|---|---|
| Inorganic fiber used | TISMO D | FTL-300 | KGP-H85 |
| Fiber length | 10 to 20 µm | 5.15 µm | 8.0 µm |
| Composition | Potassium titanate | Titanium oxide | Wollastonite |
| External appearance | 1 | 1 | 1 |
| | Absence of detachment, floating, and cracking | Absence of detachment, floating, and cracking | Absence of detachment, floating, and cracking |
| Result | ○ Acceptable | ○ Acceptable | ○ Acceptable |

Table 6 shows a summary of the results of the heat resistance/impact resistance test of the one kind of film of Comparative Example 2.

**[Table 6]**

| Comparative Example 2 | |
|---|---|
| Inorganic fiber | Not used |
| External appearance | 5 |
| | Presence of cracking, detachment, and cracking throughout the surface of the film |
| Result | × Unacceptable |

From the results in Table 5 and Table 6, effectiveness of the fibers in the impact resistance test could be confirmed for the films heated at 300°C.

### Example 8

A mixture of 30 g of an aqueous sodium silicate solution (J Sodium Silicate No. 1), 30 g of an aqueous potassium silicate solution (2K Potassium Silicate), and 40 g of pure water was prepared, and the mixture was sufficiently stirred to prepare an aqueous alkali metal silicate solution. To the aqueous silicate solution in an amount equivalent to 28 g in terms of the solid-component weight measured after heating the aqueous alkali metal silicate solution at 200°C for 2 hours, 12 g of kaolin having a bulk specific gravity of 0.21 g/cm³ and a submerged density of 2.54 g/cm³ (5M Kaolin, manufactured by Takehara Kagaku Kogyo Co., Ltd.), 12 g of borosilicate glass hollow particles having a bulk specific gravity of 0.30 g/cm³ and a submerged density equivalent to 0.59 g/cm³ (iM30K, manufactured by 3M; pressure strength = 186 MPa), 5 g of potassium titanate whisker having a bulk density of 0.62 g/cm³ and a submerged density equivalent to 2.41 g/cm³ (TISMO D, manufactured by Otsuka Chemical Co., Ltd.), and 1.3 g of a polyimide powder having a bulk density of 0.38 g/cm³ (UIP-S, manufactured by UBE Corporation) were added while the aqueous alkali metal silicate solution was stirred. After confirming that the metal oxide powder was sufficiently dispersed by sufficient stirring, the rotation speed for the stirring was increased, and the stirring was continued to obtain an aqueous composition of the present invention. In addition, aqueous compositions were prepared by the same method as described above except that the polyimide powder was used in an amount of 3 g / 7 g / 11 g / 14 g. By this, five kinds of mixed solutions using the different amounts of the polyimide powder were obtained. Subsequently, each mixed solution was transferred to a ball mill, and mixed for 120 minutes. The liquid temperature during the mixing was controlled within the range of 20°C to 30°C. During the ball-milling, defoaming was briefly carried out. Five kinds of mixed solutions were thus prepared to provide thermal insulation coatings.

Subsequently, the five kinds of liquid agents of Example 8 were used for film formation by spraying each thermal insulation coating onto the aluminum base material (200 mm × 100 mm × 4 mm (thickness)) such that the film thickness after the heat curing was adjusted to 60 µm. Subsequently, heat was applied to the film at 200°C/2 hrs to allow film formation, to obtain a thermal insulation film. Subsequently, a heat load was applied to the film at 300°C/5 hours.

### Example 9

Subsequently, the films of Example 8 after the heat load were subjected to a DuPont falling ball impact test according to JIS K5600, wherein the impact resistance of each film was investigated after dropping a 500-g steel ball from a height of 500 mm. In addition, films after the heat load obtained in the same manner were left to stand in a furnace at 400°C for 10 minutes, and then, within 5 seconds thereafter, immersed in purified water at 25°C together with the base material, to apply a thermal shock by rapid cooling. The conditions of each film were evaluated on a 6-point scale according to JIS K5600-8. In particular, the chalking condition of the film was investigated by evaluation on a 6-point scale based on "Chalking Grade (Tape Method)" in the JIS K 5600-8-1 test. The results are shown in Table 7.

**[Table 7]**

| Example 8 | | | | | |
|---|---|---|---|---|---|
| Amount of polyimide powder added | 1.3 g | 3 g | 7 g | 11 g | 13.5 g |
| Weight ratio of polyimide powder to 100 parts of Silicate solid | 4.6 parts | 10.7 parts | 25.0 parts | 38.3 parts | 48.2 parts |
| External appearance of film after steel-ball dropping impact | 2 | 1 | 1 | 1 | 2 |
| | Absence of detachment and floating Presence of slight cracking | Absence of detachment, floating, and cracking | Absence of detachment, floating, and cracking | Absence of detachment, floating, and cracking | Absence of detachment and cracking Presence of slight floating |
| External appearance of film after thermal shock test | 1 | 1 | 1 | 1 | 2 |
| | Presence of slight cracking and detachment | Absence of cracking and detachment | Absence of cracking and detachment | Absence of cracking and detachment | Absence of cracking and detachment Partial thinning of the film |
| Observation of chalking by touching with a finger, after heating at 400°C | 1 | 1 | 1 | 1 | 2 |
| Total evaluation | ○ Acceptable | ○ Acceptable | ○ Acceptable | ○ Acceptable | Acceptable |

As shown by the results in Table 7, sufficient impact resistance and thermal shock resistance could be obtained even after the heat load of 400°C in the cases where the weight ratio of the polyimide to 100 parts by weight of the solid component derived from the silicate was within the range of 4.6 parts to 48.2 parts.

### Example 10

A mixture of 30 g of an aqueous sodium silicate solution (J Sodium Silicate No. 1), 30 g of an aqueous potassium silicate solution (2K Potassium Silicate), and 40 g of pure water was prepared, and the mixture was sufficiently stirred to prepare an aqueous alkali metal silicate solution. To the aqueous silicate solution in an amount equivalent to 28 g in terms of the solid-component weight measured after heating the aqueous alkali metal silicate solution at 200°C for 2 hours, 12 g of kaolin having a bulk specific gravity of 0.21 g/cm³ and a submerged density of 2.54 g/cm³ (5M Kaolin, manufactured by Takehara Kagaku Kogyo Co., Ltd.), 12 g of borosilicate glass hollow particles having a bulk specific gravity of 0.30 g/cm³ and a submerged density equivalent to 0.59 g/cm³ (iM30K, manufactured by 3M; pressure strength = 186 MPa), 5 g of potassium titanate whisker having a bulk density of 0.62 g/cm³ and a submerged density equivalent to 2.41 g/cm³ (TISMO D, manufactured by Otsuka Chemical Co., Ltd.), and 1.3 g of a polyimide powder having a bulk density of 0.38 g/cm³ and a submerged density of 1.18 g/cm³ (UIP-S, manufactured by UBE Corporation) were added while the aqueous alkali metal silicate solution was stirred. After confirming that the metal oxide powder was sufficiently dispersed by sufficient stirring, the rotation speed for the stirring was increased, and the stirring was continued to obtain an aqueous composition of the present invention.

The volume of the cured product of silicate in 100 vol% of the cured film product formed by the aqueous composition was calculated as 33.3 vol%. This sample was provided as "Blend A". In addition, aqueous compositions were prepared by the same method as described above except that the type and the amount of the filler added were as shown below in Table 10, and that, while the aggregate used was added at different weight ratios, the volume ratio of the cured product of silicate in 100 vol% of the cured film product was adjusted to not more than 40 vol%, to obtain five mixed solutions. Subsequently, each mixed solution was transferred to a ball mill, and mixed for 120 minutes. The liquid temperature during the mixing was controlled within the range of 20°C to 30°C. During the ball-milling, defoaming was briefly carried out. Five kinds of mixed solutions were thus prepared to provide thermal insulation coatings in which the volume of the silicate solid component was adjusted to not more than 40 vol%.

Subsequently, the five kinds of liquid agents of Example 10 were used for film formation by spraying each thermal insulation coating onto the aluminum base material (200 mm × 100 mm × 4 mm (thickness)) such that the film thickness after the heat curing was adjusted to 60 µm. Subsequently, heat was applied to the film at 200°C/2 hrs to allow film formation, to obtain a thermal insulation film. Subsequently, a heat load was applied to the film at 300°C/5 hours.

### Example 11

Subsequently, the films of Example 10 after the heat load were subjected to a DuPont falling ball impact test according to JIS K5600, wherein the impact resistance of each film was investigated after dropping a 500-g steel ball from a height of 500 mm. In addition, films after heat load obtained in the same manner were further left to stand in a furnace at 500°C for 10 minutes, and then, within 5 seconds thereafter, immersed in purified water at 25°C together with the base material, to apply a thermal shock by rapid cooling. The conditions of each film were evaluated on a 6-point scale according to JIS K5600-8. The results are shown in Table 8.

**[Table 8]**

| Example 10 | | | | | |
|---|---|---|---|---|---|
| Blend name | Blend A | Blend B | Blend C | Blend D | Blend E |
| Silicate solid vol% in 100 vol% of film | 33.3% | 34.4% | 33.8% | 25.0% | 21.5% |
| Pure water | 40 g | 40 g | 40 g | 55 g | 65 g |
| Silicate Na:K = 1:1 solution Solid density = 1.9 to 2.1 g/cm³ | 60 g | 60 g | 60 g | 40 g | 32 g |
| iM30k Submerged density = 0.59 g/cm³ | 12 g | 11 g | 12 g | 12 g | 12 g |
| 5M Kaolin Submerged density = 2.54 g/cm³ | 12 g | - | - | 12 g | - |
| Cristobalite Submerged density = 2.16 g/cm³ | - | 12 g | - | - | - |
| ASP-400P Submerged density = 2.43 g/cm³ | - | - | 12 g | - | 12 g |
| TISMO D Submerged density = 2.41 g/cm³ | 5 g | - | 5 g | 5 g | - |
| FTL-300 Submerged density = 3.30 g/cm³ | | 5 g | | | 5 g |

| Blend name | Blend A | Blend B | Blend C | Blend D | Blend E |
|---|---|---|---|---|---|
| UIP-R Submerged density = 1.06 g/cm³ | - | 3 g | - | 3 g | - |
| UIP-S Submerged density = 1.18 g/cm³ | 3 g | - | 3 g | - | 3 g |
| External appearance of film after steel-ball dropping impact | 1 | 1 | 1 | 1 | 2 |
| | Absence of detachment and floating Presence of slight cracking | Absence of detachment and floating Presence of slight cracking | Absence of detachment and floating Presence of slight cracking | Absence of detachment and floating Presence of slight cracking | Presence of slight detachment and cracking |
| External appearance of film after thermal shock test | 1 | 1 | 1 | 2 | 2 |
| | Presence of slight cracking and detachment | Presence of slight cracking and detachment | Presence of slight cracking and detachment | Absence of cracking and detachment Slight reduction of the thickness | Absence of cracking and detachment Slight reduction of the thickness |
| Total evaluation | ○ Acceptable | ○ Acceptable | ○ Acceptable | ○ Acceptable | △ Acceptab le |

As shown in Table 8, favorable results on the drop impact resistance and the thermal shock resistance after the load at 500°C could be obtained in the cases where the ratio of the volume of the silicate solid component to the volume of the film was within the range of 21 to 35 vol%.

### Example 12

A mixture of 20 g of an aqueous sodium silicate solution (J Sodium Silicate No. 1), 20 g of an aqueous potassium silicate solution (2K Potassium Silicate), and 60 g of pure water was prepared, and the mixture was sufficiently stirred to prepare an aqueous alkali metal silicate solution. To the aqueous silicate solution in an amount equivalent to 28 g in terms of the solid-component weight measured after heating the aqueous alkali metal silicate solution at 200°C for 2 hours, 12 g of cristobalite having a bulk specific gravity of 0.21 g/cm³ and a submerged density of 2.16 g/cm³ (M6000, manufactured by SIBELCO), 12 g of borosilicate glass hollow particles having a bulk specific gravity of 0.30 g/cm³ and a submerged density equivalent to 0.59 g/cm³ (iM30K, manufactured by 3M; pressure strength = 186 MPa), 5 g of potassium titanate whisker having a bulk density of 0.62 g/cm³ and a submerged density equivalent to 2.41 g/cm³ (TISMO D, manufactured by Otsuka Chemical Co., Ltd.), and 1.3 g of a polyimide powder having a bulk density of 0.38 g/cm³ and a submerged density of 1.18 g/cm³ (UIP-S, manufactured by UBE Corporation) were added while the aqueous alkali metal silicate solution was stirred. After confirming that the metal oxide powder was sufficiently dispersed by sufficient stirring, the rotation speed for the stirring was increased, and the stirring was continued to obtain an aqueous composition of the present invention.

The volume of the cured product of silicate in 100 vol% of the cured film product formed by the aqueous composition was calculated as 24.5 vol%. This sample was named "Lower-Layer Liquid Agent". In addition, aqueous compositions were prepared by the same method as described above except that the type and the amount of the filler added were as shown below in Table 9, and that, while each component used was added at different weight ratios, the volume ratio of the cured product of silicate in 100 vol% of the cured film product was adjusted to not more than 40 vol%, to obtain two kinds of mixed solutions. The mixed solutions were named "Upper-Layer Liquid Agent 1" and "Upper-Layer Liquid Agent 2", respectively. Subsequently, each mixed solution was transferred to a ball mill, and mixed for 120 minutes. The liquid temperature during the mixing was controlled within the range of 20°C to 30°C. During the ball-milling, defoaming was briefly carried out. A total of three kinds of mixed solutions were thus prepared to provide thermal insulation coatings.

Subsequently, the three kinds of liquid agents of Example 12 were used for film formation by spraying each thermal insulation coating onto the aluminum base material (200 mm × 100 mm × 4 mm (thickness)) such that the film thickness after the heat curing was adjusted to 60 µm. Subsequently, heat was applied to the film at 200°C/2 hrs to allow film formation, to obtain a thermal insulation film. Subsequently, a heat load was applied to the film at 300°C/5 hours.

### Example 13

Subsequently, the films of Example 12 after the heat load were subjected to a DuPont falling ball impact test according to JIS K5600, wherein the impact resistance of each film was investigated after dropping a 500-g steel ball from a height of 500 mm. In addition, films after the heat load obtained in the same manner were left to stand in a furnace at 500°C for 10 minutes, and then, within 5 seconds thereafter, immersed in purified water at 25°C together with the base material, to apply a thermal shock by rapid cooling. The conditions of each film were evaluated on a 6-point scale according to JIS K5600-8. The results are shown in Table 9.

**[Table 9]**

| Example 12 | | | | |
|---|---|---|---|---|
| | Combination A | | Combination B | |
| Blend name | Lower-Layer Liquid Agent | Upper-Layer Liquid Agent 1 | Lower-Layer Liquid Agent | Upper-Layer Liquid Agent 2 |
| Silicate solid vol% in 100 vol% of film | 23.5% | 34.6% | 23.5% | 40.0% |
| Pure water | 60 g | 30 g | 60 g | 30 g |
| Silicate Na:K = 1:1 solution Solid density = 1.9 to 2.1 g/cm³ | 40 g | 70 g | 40 g | 80 g |
| iM30k Submerged density = 0.59 g/cm³ | 12 g | 12 g | 12 g | 11 g |
| Cristobalite Submerged density = 2.16 g/cm³ | 12 g | 12 g | 12 g | 12 g |
| TISMO D Submerged density = 2.41 g/cm³ | 5 g | 5 g | 5 g | 5 g |
| UIP-R Submerged density = 1.06 g/cm³ | - | 3 g | - | 3 g |
| UTP-S Submerged density = 1.18 g/cm³ | 3 g | - | 3 g | - |
| External appearance of film after steel-ball dropping impact | 1 | | 1 | |
| | Presence of slight cracking Absence of detachment | | Presence of slight cracking Absence of detachment | |
| External appearance of film after thermal shock test | 2 | | 2 | |
| | Presence of slight cracking and detachment | | Presence of slight cracking and detachment | |
| Total evaluation | Δ Acceptable | | Δ Acceptable | |

The results in Table 9, regarding the films having the double-layer structure, indicate that both the combination A and the combination B produced films having both a favorable film external appearance after the steel-ball dropping impact and a favorable external appearance after the thermal shock test.

### Example 14

To 100 parts by weight of pure water, 75 parts by weight of an aqueous sodium silicate solution (J Sodium Silicate No. 1) and 75 parts by weight of an aqueous potassium silicate solution (2K Potassium Silicate) were added, and the resulting mixture was sufficiently stirred to prepare an aqueous alkali metal silicate solution. Further, 30 parts by weight of kaolin having a bulk specific gravity of 0.21 g/cm³ and a submerged density of 2.54 g/cm³ (5M Kaolin, manufactured by Takehara Kagaku Kogyo Co., Ltd.), 30 parts by weight of borosilicate glass hollow particles having a bulk specific gravity of 0.30 g/cm³ and a submerged density equivalent to 0.59 g/cm³ (iM30K, manufactured by 3M; pressure strength = 186 MPa), and 12.5 parts by weight of potassium titanate whisker having a bulk density of 0.62 g/cm³ and a submerged density equivalent to 2.41 g/cm³ (TISMO D, manufactured by Otsuka Chemical Co., Ltd.) were added with respect to 100 parts by weight of the pure water while the aqueous alkali metal silicate solution was stirred. After confirming that the metal oxide powder was sufficiently dispersed by sufficient stirring, the rotation speed for the stirring was increased, and the stirring was continued to obtain an aqueous composition of the present invention.

This aqueous composition was named "Blend A". In addition, aqueous compositions were prepared by the same method as described above except that the components were added in the amounts shown in the following table, and that, while the aggregate used was added at different weight ratios, its weight ratio was adjusted within the above-described range with respect to 100 parts by weight of the pure water, to obtain two mixed solutions. These mixed solutions were named Blend B and Blend C, respectively. Subsequently, each mixed solution was transferred to a ball mill, and mixed for 120 minutes. The liquid temperature during the mixing was controlled within the range of 20°C to 30°C. During the ball-milling, defoaming was briefly carried out. Three kinds of mixed solutions were thus prepared to provide thermal insulation coatings.

Subsequently, the three kinds of liquid agents of the Example were used for film formation by spraying each thermal insulation coating onto the aluminum base material (200 mm × 100 mm × 4 mm (thickness)) such that the film thickness after the heat curing was adjusted to 60 µm. Subsequently, heat was applied to the film at 200°C/2 hrs to allow film formation, to obtain a thermal insulation film. Subsequently, a heat load was applied to the film at 400°C/1 hour.

Subsequently, the films of the Example after the heat load were subjected to a DuPont falling ball impact test according to JIS K5600, wherein the impact resistance of each film was investigated after dropping a 500-g steel ball from a height of 500 mm. In addition, films after the heat load obtained in the same manner were left to stand in a furnace at 400°C for 10 minutes, and then, within 5 seconds thereafter, immersed in purified water at 25°C together with the base material, to apply a thermal shock by rapid cooling. The conditions of each film were evaluated on a 6-point scale according to JIS K5600-8. The results are shown in Table 10.

**[Table 10]**

| Blend name | Blend A | Blend B | Blend C |
|---|---|---|---|
| Pure water | 100 | 100 | 100 |
| Silicate Na:K = 1:1 solution | 150 | 80 | 170 |
| iM30k Submerged density = 0.59 g/cm³ | 30 | 12 | 65 |
| 5M Kaolin Submerged density = 2.54 g/cm³ | 30 | 65 | 12 |
| TISMO D Submerged density = 2.41 g/cm³ | 12.5 | 5 | 25 |
| External appearance of film after steel-ball dropping impact | 1 Absence of detachment and floating Presence of slight cracking | 1 Absence of detachment and floating Presence of slight cracking | 1 Absence of detachment and floating Presence of slight cracking |
| External appearance of film after thermal shock test | 1 Presence of slight cracking and detachment | 1 Presence of slight cracking and detachment | 1 Presence of slight cracking and detachment |
| Total evaluation | ○ Acceptable | ○ Acceptable | ○ Acceptable |

### Example 15

To 40 g of pure water, 12 g of kaolin having a bulk specific gravity of 0.21 g/cm³ and a submerged density of 2.54 g/cm³ (5M Kaolin, manufactured by Takehara Kagaku Kogyo Co., Ltd.), 12 g of borosilicate glass hollow particles having a bulk specific gravity of 0.30 g/cm³ and a submerged density equivalent to 0.59 g/cm³ (iM30K, manufactured by 3M; pressure strength = 186 MPa), 5 g of potassium titanate whisker having a bulk density of 0.62 g/cm³ and a submerged density equivalent to 2.41 g/cm³ (TISMO D, manufactured by Otsuka Chemical Co., Ltd.), and 1.3 g of a polyimide powder having a bulk density of 0.38 g/cm³ (UIP-S, manufactured by UBE Corporation) were added while the pure water was stirred. After confirming that the metal oxide powder was sufficiently dispersed by sufficient stirring, the rotation speed for the stirring was increased, and the stirring was continued to obtain an aqueous composition in a state where the silicates were not contained. In addition, aqueous compositions were prepared by the same method as described above except that the polyimide powder was used in an amount of 3 g / 7 g / 11 g / 14 g. By this, five kinds of mixed solutions using the different amounts of the polyimide powder were obtained. Subsequently, each mixed solution was transferred to a ball mill, and mixed for 120 minutes. The liquid temperature during the mixing was controlled within the range of 20°C to 30°C. During the ball-milling, defoaming was briefly carried out. Five kinds of mixed solutions were thus prepared to provide five kinds of base agents before addition of the silicates that act as adhesive components.

Subsequently, the aqueous sodium silicate solution (J Sodium Silicate No. 1) and the aqueous potassium silicate solution (2K Potassium Silicate) were added to each of the five kinds of base agents while the weight ratios were adjusted such that 30 g of the aqueous sodium silicate solution and 30 g of the aqueous potassium silicate solution were contained with respect to 40 g of the pure water in the base agent. The resulting mixture was mixed for 20 minutes using a propeller stirrer such that the base agent and the silicates were mixed well, to achieve component ratios equivalent to those of the five kinds of aqueous compositions described in Example 8.

Subsequently, the five kinds of liquid agents of Example 15 were used for film formation by spraying each thermal insulation coating onto the aluminum base material (200 mm × 100 mm × 4 mm (thickness)) such that the film thickness after the heat curing was adjusted to 60 µm. Subsequently, heat was applied to the film at 200°C/2 hrs to allow film formation, to obtain a thermal insulation film. Subsequently, a heat load was applied to the film at 300°C/5 hours.

### Example 16

Subsequently, the films of Example 15 after the heat load were subjected to a DuPont falling ball impact test according to JIS K5600, wherein the impact resistance of each film was investigated after dropping a 500-g steel ball from a height of 500 mm. In addition, films after the heat load obtained in the same manner were left to stand in a furnace at 400°C for 10 minutes, and then, within 5 seconds thereafter, immersed in purified water at 25°C together with the base material, to apply a thermal shock by rapid cooling. The conditions of each film were evaluated on a 6-point scale according to JIS K5600-8. In particular, the chalking condition of the film was investigated by evaluation on a 6-point scale based on "Chalking Grade (Tape Method)" in the JIS K 5600-8-1 test. The results are shown in Table 11.

**[Table 11]**

| Example 16 | | | | | |
|---|---|---|---|---|---|
| Amount of polyimide powder added | 1.3 g | 3 g | 7 g | 11 g | 13.5 g |
| Weight ratio of polyimide powder to 100 parts of Silicate solid | 4.6 parts | 10.7 parts | 25.0 parts | 38.3 parts | 48.2 parts |
| External appearance of film after steel-ball dropping impact | 2 Absence of detachment and floating; presence of slight cracking | 1 Absence of detachment, floating, and cracking | 1 Absence of detachment, floating, and cracking | 1 Absence of detachment, floating, and cracking | 2 Absence of detachment and cracking; presence of slight floating |
| External appearance of film after thermal shock test | 1 Presence of slight cracking and detachment | 1 Absence of cracking and detachment | 1 Absence of cracking and detachment | 1 Absence of cracking and detachment | 2 Absence of cracking and detachment Partial thinning of the film |
| Observation of chalking by touching with a finger, after heating at 400°C | 1 | 1 | 1 | 1 | 2 |
| Total evaluation | ○ Acceptable | ○ Acceptable | ○ Acceptable | ○ Acceptable | Acceptable |

As shown by the results in Table 11, the thermal insulation coatings in Example 8, which were prepared by the two-liquid system in which the adhesive component was added later, were subjected to film formation, and evaluated. As a result, sufficient impact resistance and thermal shock resistance could be obtained even after the thermal shock load at 400°C, even by the method in which the silicate component as the adhesive component was added later.

### Example 17

To 40 g of pure water, 0.15 g of SN Dispersant 5027, which is a polymer-type dispersant manufactured by San Nopco Ltd., was added, and then 12 g of kaolin having a bulk specific gravity of 0.21g/cm³ and a submerged density of 2.54 g/cm³ (5M Kaolin, manufactured by Takehara Kagaku Kogyo Co., Ltd.), 12 g of borosilicate glass hollow particles having a bulk specific gravity of 0.30 g/cm³ and a submerged density equivalent to 0.59 g/cm³ (iM30K, manufactured by 3M; pressure strength = 186 MPa), 5 g of potassium titanate whisker having a bulk density of 0.62 g/cm³ and a submerged density equivalent to 2.41 g/cm³ (TISMO D, manufactured by Otsuka Chemical Co., Ltd.), and 7 g of a polyimide powder having a bulk density of 0.38 g/cm³ (UIP-S, manufactured by UBE Corporation) were added while the pure water was stirred. After confirming that the metal oxide powder was sufficiently dispersed by sufficient stirring, the rotation speed for the stirring was increased, and the stirring was continued to obtain an aqueous composition in a state where the silicates were not contained. The amount of the Dispersant 5027 added was adjusted to about 0.5% with respect to the total weight of the inorganic powder/inorganic particles/inorganic fibers. In addition, aqueous compositions were prepared by the same method as described above except that Noplax 6000H or SN Dispersant 2010, manufactured by San Nopco Ltd., was used as the dispersant. By this, three kinds of mixed solutions using the different kinds of dispersants were obtained. Subsequently, each mixed solution was transferred to a ball mill, and mixed for 120 minutes. The liquid temperature during the mixing was controlled within the range of20°C to 30°C. During the ball-milling, defoaming was briefly carried out. Three kinds of mixed solutions were thus prepared to provide three kinds of base agents before addition of the silicates that act as adhesive components.

Subsequently, the aqueous sodium silicate solution (J Sodium Silicate No. 1) and the aqueous potassium silicate solution (2K Potassium Silicate) were added to each of the three kinds of base agents while the weight ratios were adjusted such that 30 g of the aqueous sodium silicate solution and 30 g of the aqueous potassium silicate solution were contained with respect to 40 g of the pure water in the base agent. The resulting mixture was mixed for 20 minutes using a propeller stirrer such that the base agent and the silicates were mixed well, to obtain three kinds of thermal insulation coatings.

Subsequently, for the purpose of investigating the dispersion effect of the dispersant, the three kinds of liquid agents of Example 17 were subjected to investigation of the aggregation property of the particles in each liquid agent using a fineness gauge based on the evaluation method of JIS-K-5600-2-5. The results are shown in Table 12.

### Example 18

For the purpose of investigating the effect of the dispersant on the homogenization of the coating liquid, the three kinds of liquid agents of Example 17 were subjected to the following evaluation . First, the aluminum base material (200 mm × 100 mm × 4mm (thickness)) described above was preliminarily subjected to blasting, and then masked along the four peripheral sides. Each of the three kinds of liquid agents of Example 17 was sprayed onto the provided base material, to perform film formation. Immediately after the film formation, the masking tape was removed. At this time, the blasted base material after the removal of the tape was investigated to confirm whether or not flowing away of the adhesive solution component occurred by oozing out from the masking edge, that is, from the edge of the coating liquid, due to the capillary phenomenon. The results are shown in Table 12.

**[Table 12]**

| Examples 17, 18 | | | |
|---|---|---|---|
| Dispersant | 5027 | 6000H | 2010 |
| Amount added | 0.15 g | | |
| Type of dispersant | Anionic polymer | Anionic polymer | Anionic polymer |
| Fineness gauge result | Streaks and aggregates appear from about 25 µm | Streaks and aggregates appear from about 20 µm | Streaks and aggregates appear from about 20 µm |
| External appearance regarding oozing out to the portion after removal of masking | Very slight oozing out | No external appearance showing oozing out | No external appearance showing oozing out |
| Total evaluation | ○ Acceptable | ○ Acceptable | ○ Acceptable |

As shown by the results in Table 12, the thermal insulation coatings of Example 17, in which dispersibility of the particles was improved using the polymer-type anionic dispersants, were subjected to film formation, and evaluated. As a result, no aggregated particles exceeding the desired film thickness were found in any of the methods using the polymer-type dispersants. Moreover, flowing away, that is, oozing out, of the solution component from the edge of the coating liquid to the blasted surface, where the capillary phenomenon tends to occur, was not or hardly found. Further, in spite of the fact that the dispersants used were organic components, no deterioration or the like was found in the impact resistance and the like of the films after the imparting of the heat resistance. It could thus be confirmed that the amount of the dispersant added in the present Example does not cause any problem.

## Claims

1. An aqueous composition comprising:
a hollow powder material composed of a silicon dioxide compound, having a hollow structure therein, the hollow structure being a porous or single-spherical structure;
a metal oxide powder material having a non-hollow structure;
a metal oxide fiber material;
an alkali metal silicate; and
water;
the composition comprising at least sodium silicate and potassium silicate as the alkali metal silicate,
the hollow powder material having an average particle size within the range of 5 µm to 40 µm, a bulk specific gravity within the range of 0.14 to 0.95 g/cm³, and a pressure strength of not less than 10 MPa.

2. The aqueous composition according to claim 1, wherein the metal oxide powder material has an average particle size within the range of 1 µm to 15 µm, and a true density of not more than 3.6.

3. The aqueous composition according to any one of claims 1 and 2, wherein the inorganic oxide fiber is at least one selected from the group consisting of potassium titanate whisker, wollastonite, and acicular titanium oxide.

4. The aqueous composition according to any one of claims 1 to 3, further comprising a polyimide resin, wherein the polyimide resin is added at a ratio within the range of 3 to 50 parts by weight with respect to 100 parts by weight of the alkali metal silicate in a thermoset film.

5. The aqueous composition according to any one of claims 1 to 4, wherein, when the water content in the aqueous composition is taken as 100 parts by weight, the content of the hollow powder material is 8 parts by weight to 75 parts by weight; the content of the metal oxide powder material is 5 parts by weight to 70 parts by weight; the content of the metal oxide fiber material is 3 parts by weight to 35 parts by weight; and the content of the alkali metal silicate is 80 parts by weight to 175 parts by weight.

6. The aqueous composition according to any one of claims 1 to 5, wherein the aqueous composition is a two-part liquid system aqueous composition comprising:
a first liquid composed of an adhesive solution that comprises at least the alkali metal silicate; and
a second liquid that is an aqueous dispersion comprising the hollow powder material, the metal oxide powder material, and the metal oxide fiber material, or an aqueous dispersion comprising, in addition to the above aqueous dispersion, at least one kind of the alkali metal silicate.

7. The aqueous composition according to any one of claims 1 to 6, wherein a dispersant for dispersing the hollow powder material, the metal oxide powder material, and the metal oxide fiber material is added to the water, or to a liquid comprising the water and at least one of the sodium silicate and the potassium silicate.

8. The aqueous composition according to claim 7, wherein the dispersant is an aqueous anionic polymer, and the amount of the aqueous anionic polymer added is 0.1 to 3.0% by weight with respect to the total weight of the hollow powder material, the metal oxide powder material, and the metal oxide fiber material.

9. A cured product of the aqueous composition according to any one of claims 1 to 8.

10. The cured product according to claim 9, in the form of a film formed on a metal base material.

11. A structure comprising:
a metal base material; and
a film composed of the cured product according to claim 9, formed on the metal base material.

12. The structure according to claim 11, wherein the metal base material is composed of an aluminum alloy material, and the content of the alkali metal silicate in the cured product is not more than 40% by volume with respect to the total volume of the cured product.

13. The structure according to claim 11 or 12, wherein the film composed of the cured product is composed of: a first cured-product layer that is in direct contact with the metal base material; and a second cured-product layer formed on the first cured-product layer; wherein the volume ratio of the solid component derived from the alkali metal silicate contained in the second cured-product layer is 1.05 to 2.0 times the volume ratio of the solid component derived from the alkali metal silicate contained in the first cured-product layer.
